# EUROPÄISCHE PATENTSCHRIFT

(11) **EP 1 221 147 B1**
(45) Veröffentlichungstag und Bekanntmachung des Hinweises auf die Patenterteilung: **07.06.2006**
(21) Anmeldenummer: 00971267.0
(22) Anmeldetag: 29.09.2000
(51) Int. Cl.: G07F 17/16, H04L 12/14

(54) **VERFAHREN ZUR LAUFENDEN UND PRÄVENTIVEN ANZEIGE VON ÜBERTRAGUNGSKOSTEN BEI DER DATENÜBERTRAGUNG VON INTERNET- UND ONLINEDATEN**
METHOD FOR CURRENT AND PREVENTIVE DISPLAY OF TRANSMISSION COSTS IN DATA TRANSMISSION OF INTERNET AND ONLINE DATA
PROCEDE DE NOTIFICATION COURANTE ET PREVENTIVE DE FRAIS DE TRANSMISSION LORS DU TRANSFERT DE DONNEES INTERNET ET ON-LINE

(30) Priorität: 29.09.1999 DE 19946556
(43) Veröffentlichungstag der Anmeldung: 10.07.2002
(73) Patentinhaber: T-Mobile Deutschland GmbH, 53227 Bonn (DE)
(72) Erfinder: KELLER, Walter, 40880 Ratingen (DE)
(74) Vertreter: Riebling, Peter
(86) Internationale Anmeldenummer: PCT/DE2000/003449
(87) Internationale Veröffentlichungsnummer: WO 2001/024126

(56) Entgegenhaltungen:
- WO-A-97/01920
- WO-A-97/39549
- WO-A-98/02828
- DE-A- 19 748 353
- DE-A- 19 749 798
- FR-A- 2 774 239
- TAYLOR K: "INTERNET ACCESS: GETTING THE WHOLE PICTURE" DATA COMMUNICATIONS,US,MCGRAW HILL. NEW YORK, Bd. 25, Nr. 3, 1. März 1996 (1996-03-01), Seite 50,52 XP000558797 ISSN: 0363-6399
- RUTH G ET AL: "USAGE-BASED COST RECOVERY IN INTERNETWORKS" , BUSINESS COMMUNICATIONS REVIEW,US,HINSDALE, IL, VOL. 22, NR. 7, PAGE(S) 38-42 XP000577637 das ganze Dokument

## Beschreibung

Die Erfindung betrifft ein Verfahren zur laufenden und präventiven Anzeige von Übertragungskosten bei der Datenübertragung von Internet- und Onlinedaten über mindestens ein Kommunikationsnetz von einem Teilnehmer zu mindestens einem Diensteanbieter und umgekehrt, nach dem Oberbegriff des Patentanspruchs 1.

Die prinzipiellen Anwendungsmöglichkeiten für den Internetbetrieb mit den dazugehörigen Protokollstrukturen sind hinlänglich bekannt. Demnach bestehen die häufigsten Anwendungen im Ansehen von Intemetseiten (das sog. Browsen), die beispielsweise in Hypertext Markup Language HTML verfaßt sind und mittels Hypertext Transfer Protocol HTTP über das auf TCP/IP als Transport-Protocol basierende Internet in das Benutzergerät, beispielsweise ein Personal Computer PC, geladen werden. Die teilnehmerseitige Softwarevoraussetzung zum Internetbetrieb ist in der Regel das Vorhandensein eines sog. Browsers.

Daneben besteht als weiterer Schwerpunkt die Möglichkeit zur Übertragung umfangreicher Dateien mit beliebigem Inhalt. Diese Daten werden beispielsweise mittels File Transfer Protocol FTP übertragen, wobei eine häufige Anwendung beispielsweise im sog. Download neuer Software-Releases für den PC-Bereich liegt. Hier können mitunter sehr lange Übertragungszeiten entstehen, wenn es sich um umfangreiche Daten in Kombination mit langsamen Intemetanschlüssen handelt.

Ein weiterer Schwerpunkt ist die Übertragung von elektronischer Post, sogenannter E-Mails, beispielsweise mittels Simple Mail Transfer Protocol SMTP, wobei es sich hierbei vorzugsweise um recht geringe Datenmengen handelt, die jedoch mit Anlagen ergänzt werden können. Diese Anlagen sind dann häufig Dateien mit Texten, Daten oder Bildern, wobei es sich hier wiederum um umfangreiche Datenbestände handeln kann.

Unter Anwendung der üblichen Verfahrensweise für den Internetzugang sowie für den Onlinezugang ist der Teilnehmer mit seinem PC über ein Modem an ein Telekommunikationsnetz, beispielsweise das ISDN-Netz, angeschlossen. Hiermit stellt er eine Wählverbindung zum betreffenden Internet Access Provider (IAP) her. Danach nutzt er entweder das Angebot des IAP, der ggf. eigene Dienstleistungen, wie Wettervorhersage, Diskussionsforen, Warenangebote in Kooperation mit Partnerfirmen etc. zur Verfügung stellt (IAP ist gleichzeitig Online- oder Internet Service Provider), oder er nutzt den IAP als Übergang zu den weltweit am Internet angeschlossenen Internet Service Providern ISP. Diese Kommunikation kommt in der Regel jedoch nur dann zustande, wenn der Teilnehmer sowohl ein Vertragsverhältnis mit einem Telekommunikationsuntemehmen (Telco) als IAP-Zugang sowie ein zusätzliches Vertragsverhältnis mit einem IAP hat, der gemäß o.g. Beispiel selbst ISP sein kann.

Die Struktur der Übertragungskosten ist entsprechend kompliziert. Sie setzt sich in der Regel aus monatlichen Grundbeträgen für beide Provider (Telco und IAP) sowie aus verbindungsspezifischen laufenden Kosten für die jeweilige Sitzung (Session) zusammen. Hinzu kommen zusätzliche Kosten für die etwaige Inanspruchnahme von ISP-Dienstleistungen, die über getrennte Rechnung, Kreditkartenverrechnung oder in einigen Fällen, wie beispielsweise bei T-Online, mittels besonderer Vertragsverhältnisse zwischen ISP und Lieferant, über die Telefonrechnung erfaßt werden.
Das mit dieser Verfahrensweise verbundene Problem besteht insbesondere darin, daß der Teilnehmer bis zum Eintreffen der monatlichen nachträglichen Telefonrechnung kaum einer Kontrolle hat, welche Kosten er mit seinem Internet-Zugriff verursacht. Der einzige Anhaltspunkt, den er derzeit besitzt ist die optionale Angabe der Dateigröße, die beim FTP-Downloadverfahren von vielen ISP angezeigt wird. Mit dieser Information kann der Teilnehmer beispielsweise die Übertragungskosten seiner Telefongeselischaft sowie die Session-Kosten seines IAP selbst ausrechnen, bevor er die Daten als Download anfordert.
Dieser Prozeß ist jedoch nicht ganz trivial. Zunächst muß der Teilnehmer die Datenübertragungsgeschwindigkeit seiner Telefonleitung und seines Terminaladapters oder seines Modem sowie ungefähr den Protokoll-Overhead der Internet- und Anwendungsprotokolle kennen. Dann kalkuliert er die erforderliche Übertragungszeit und hiernach, unter Beachtung der jeweiligen komplexen Tarifstrukturen, die damit verbundenen Telco- und IAP-Kosten.
Dieser Verfahrensweise ist mühsam und ungenau, zumal die Übertragungsgeschwindigkeit aus Gründen der Netz- oder Serverüberiastung an beliebiger Stelle in der kompletten Verbindung sowie bei schlechter Telefonleitung mit häufigen automatischen Wiederholungen zusätzliche Verzögerungen erfahren kann.
Sie bringt auch keinerlei Unterstützung für die Ermittlung der laufenden Gebühren, beispielsweise bei der Übermittlung von HTML-Seiten, wo keine Volumenangabe vor der Übertragung erfolgt, die quittiert werden muß.

Es ist daher ein Verbesserung der Situation durch die Einführung eines automatischen Ermittlungsverfahrens erforderlich.

Die FR-A-2 774 239 offenbart ein System zur Überwachung der Nutzung einer Vielzahl von Kommunikationsterminals, wobei das System eine Kostenkontrolle und -abrechnung der Verbindungskosten erlaubt. Die Terminals sind jeweils mit einem Kartenleser ausgerüstet, in we!chen der Benutzer eine Guthabenkarten einführt. Die Zeitdauer der Benutzung des Terminals wird erfasst und daraus die entsprechenden Nutzungsgebühren ermittelt und dem Benutzer angezeigt. Gleichzeitig werden die ermittelten Nutzungsgebühren vom Guthaben auf der Guthabenkarte abgezogen. Ist das Guthaben aufgebraucht, ist kein Zugang zum Terminal mehr möglich. Die Berechnung der Nutzungsgebühren erfolgt also auf Basis der Nutzungsdauer.

Aus der WO 98 02828 A ist ein Verfahren und System bekannt, welches einem Endnutzer einen Zugang zum Internet ermöglicht. Im Personal Computer des Endnutzers ist ein Überwachungsprogramm installiert, welches die Verbindungsdauer zu bestimmten Internetseiten überwacht und zum Internet Access Provider überträgt. Anhand der Verbindungsdauer kann der Internet Access Provider die Nutzungsgebühren ermitteln und dem Endnutzer oder einem Service Provider in Rechung stellen. Auch hier erfolgt die Berechnung der Gebühren allein auf Basis der Verbindungsdauer.

Der Aufsatz von Dr. Ruth, Gregory et al. "Usage-Based Cost Recovery in Internetworks", Business Communications Review, US, Hindsdale, IL, Vol. 22, No. 7, Pages 38-42 befasst sich mit Möglichkeiten der Abrechnung von Internetdienstleistungen. Angesprochen wird eine Gebührenerfassung in Abhängigkeit von der Art des Internetzugangs, der Tageszeit, dem Übertragungsvolumen, der Zugangsgeschwindigkeit und der Verbindungszeit. Konkrete Lösungen zur technischen Umsetzung werden nicht angegeben.

Der vorliegenden Erfindung liegt die Aufgabe zugrunde, ein Verfahren in Form einer Implementierung in einem Endgerät eines Kommunikationsnetzes vorzuschlagen, auf dessen Basis der Internet- oder Online-Teilnehmer laufend während einer Sitzung, als auch präventiv vor einer anstehenden Übertragung großer Datenmengen, unabhängig vom verwendeten Übertragungsverfahren mit einer Information der Übertragungskosten versorgt werden kann.

Gelöst wird diese Aufgabe durch die kennzeichnenden Merkmale des Patentanspruchs 1.

Der Kern der Erfindung beruht darin, daß zur Ermittlung und Anzeige der Gesamtkosten für laufende und bevorstehende Datenübertragungen im Endgerät des Teilnehmers eine Gebührenermittlungssoftware derart eingesetzt wird, daß sie unter Nutzung einer Gebührenstrukturdatei, die alle relevanten Gebührenverfahren der an der Verbindung beteiligten Diensteanbieter und Kommunikationsnetze enthält, sowie unter Ermittlung der laufenden Kommunikationszeit und/oder des Übertragungsvolumens die aktuellen Übertragungskosten berechnet und vorzugsweise auf einem vorhandenen Display oder Bildschirm des Endgeräts zur Darstellung bringt. Im Endgerät wird eine Gebührenprognosesoftware (GPS) eingesetzt, die, vorzugsweise durch automatische Erkennung oder durch händische Vorarbeit (Markierung) oder durch händische Eingabe eines entsprechenden Wertes, den Datenumfang einer bevorstehenden Übertragung erkennt und daraus unter Berücksichtigung der Gebührenstrukturdatei die prognostizierten Übertragungskosten ermittelt und am Endgerät zur Anzeige bringt. Somit kann der Teilnehmer vor Anforderung einer Datenübertragung die anfallenden Kosten bestimmen.

Hierbei sind die Möglichkeiten vorgesehen, daß die Gebührenstrukturdatei initial händisch oder vorzugsweise per. Download aus dem Telekommunikationsnetz und/oder vom Diensteanbieter in das Endgerät geladen wird. Dies kann der Teilnehmer vorzugsweise nach Wunsch einrichten.

Die Gebührenstrukturdatei enthält erfindungsgemäß anwendungsspezifische Gebührenstrukturen unterschiedlicher Zugangsnetze und Diensteanbieter, wobei die Gebührenermittlungssoftware in diesem Fall die jeweiligen Gebühren unter Berücksichtigung der Zugangskennung der beteiligten Telekommunikationsnetze und Diensteanbieter, wie z.B. Telefonnummer, Netzkennziffer, Service Provider Adresse o.ä., ermittelt.

Vorzugsweise ermittelt die Gebührenprognosesoftware (GPS) unter Berücksichtigung der voraussichtlich durch Protokoll-Overhead hinzukommenden Datenmenge sowie des statistischen Datendurchsatzes die prognostizierten Übertragungskosten und bringt sie am Endgerät zur Anzeige.

Eine zusätzliche Weiterbildung ermöglicht es dem Teilnehmer, die Übertragungskosten weiter zu senken, indem ein zusätzliches Menue (ME) an Endgerät zur Anzeige gebracht wird, welches einen kostenoptimierten Vorschlag mit entsprechender Aktivierungsmöglichkeit beinhaltet, um eine endgeräteseitige Übertragung der gewünschten Daten zu einem kostengünstigeren späteren Zeitpunkt automatisch vorzunehmen, wobei die entsprechende automatische Ausführung durch die Gebührenprognosesoftware oder ein hierdurch gesteuertes aufgabenspezifisches getrenntes Modul durchgeführt wird. Somit können z.B. große Datenmengen automatisch zum günstigen Nachtarif übertragen werden.

Vorteilhaft erfolgt die Anzeige der Übertragungskosten in einem dafür geeigneten Feld der Anzeigedarstellung der Browsersoftware des Endgeräts, wobei die Gebührenermittlungssoftware, die Gebührenprognosesoftware und vorzugsweise die Gebührenstrukturdatei direkt innerhalb der Browsersoftware des Endgeräts angeordnet sein können.

Zur automatische Erfassung der Datenvolumen für die Kostenberechnung kann seitens des Diensteanbieters eine Kennzeichnung der Volumenangabe angebotener Datenübertragungen vorgenommen werden, so daß die Gebührenermittlungssoftware in der Lage ist, die voraussichtlichen Übertragungskosten rasch zu berechnen. Diese Kennzeichnung kann beispielsweise durch die Einführung eines besonderen Kennzeichens (Makro, Flag, Java Bean etc.) für die entsprechende Datenvolumenkennzeichnung innerhalb HTML-Pages erfolgen.

Verfügt der Teilnehmer über eine Mehrzahl von Endgeräten, die mittels einer privaten Telekommunikationsanlage (Nebenstellenanlage), einem privaten Telekommunikationsnetz oder einem lokalen Datennetz (LAN) miteinander verbunden sind, ist in einer erweiterten Ausführungsform der Erfindung vorgesehen, eine teilnehmerseitig zentrale Gebührenerfassung in einer zentralen Gebührenerfassungseinrichtung für die mehreren Endgeräte vorzunehmen. Dabei werden die ermittelten endgerätespezifischen Gebühren jeweils automatisch zum betreffenden Endgerät übertragen und/oder können von der Gebührenerfassungseinrichtung abgerufen und/oder dort eingesehen werden. Dies ermöglicht automatisch oder auf Anforderung eine unterschiedliche Auf- und Zusammenstellungen von Summenkosten mehrerer Endgeräte durch die zentrale Gebührenerfassungseinrichtung, beispielsweise für betriebswirtschaftliche Kostenstellenrechnungen und Gesamtverzeichnisse.

Die Erfindung wird unter Verwendung von Zeichnungsfiguren, die hier lediglich eine mögliche Ausführungsart am Beispiel einer Internet-Übertragung und einem PC als Endgerät beschreiben, erläutert, wobei sich anhand der Zeichnungsfiguren weitere Merkmale, Anwendungsgebiete und Vorteile der Erfindung ergeben. Es zeigen:
- Fig. 1:: Eine typische Intemetverbindung;
- Fig. 2:: In Form eines Blockdiagramms die erfindungsgemäße Endgeräteerweiterung;
- Fig. 3:: Beispiel einer Internetverbindung mit erfindungsgemäßer Erweiterung zur Kostenanzeige.

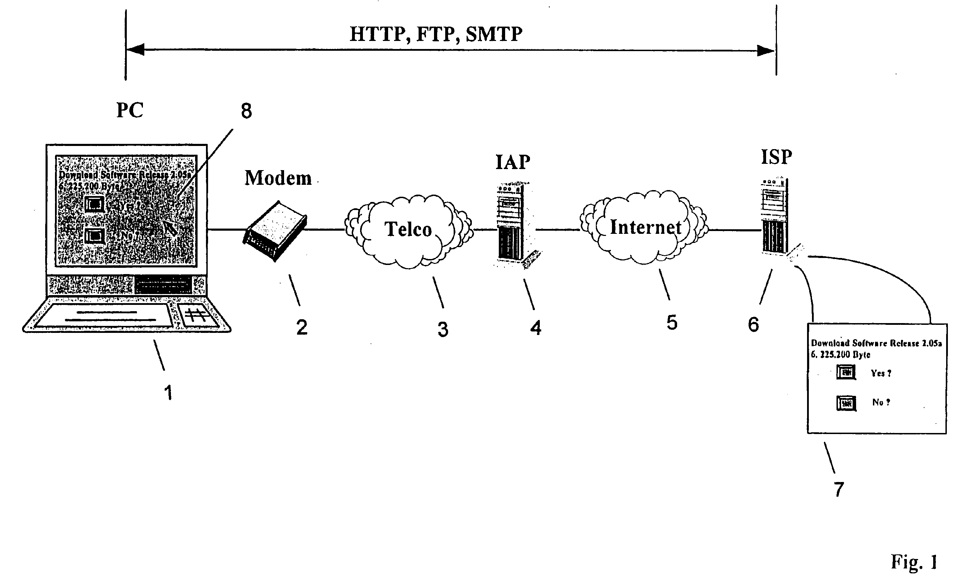

Fig. 1 zeigt eine schematische Internetverbindung. Ein Teilnehmer mit beispielsweise einem Personal Computer als Endgerät 1 ist mittels Modem 2 an einem Telekommunikationsnetz 3 angeschlossen. Hier besteht der Übergang zum Diensteanbieter 4 (Internet Access Provider), der die Verbindung zum weltweiten Internet 5 herstellt. In diesem Beispiel kommuniziert der Teilnehmer mit einem entfernten Internet Service Provider 6, der ein bestimmtes Angebot, beispielsweise eine Internetseite 7 bietet und zum PC überträgt, wo die Seite auf der Anzeige 8 dargestellt wird. In der Realität bietet ein ISP 6 oft nicht direkt alle Angebote, sondern stellt vergleichbar der Strecke zwischen Endgerät 1 und Telco 3 eine Verbindung zu sog. Hostrechnern fremder Unternehmen her, die ihrerseits den ISP 6 als IAP benutzen. Dieser Umstand ist in der vorliegenden Betrachtungsweise jedoch nicht ausschlaggebend und wurde zur Vereinfachung daher nicht dargestellt.

Die Übertragung der Inhalte, hier der Seite 7, erfolgt mittels Ende zu Ende-Protokoll, so daß der Inhalt für die Transitvermittlungsknoten (Router) nicht einsehbar ist. Daher ist eine netzseitige Unterstützung einer Kostenanzeige prinzipiell nicht möglich.

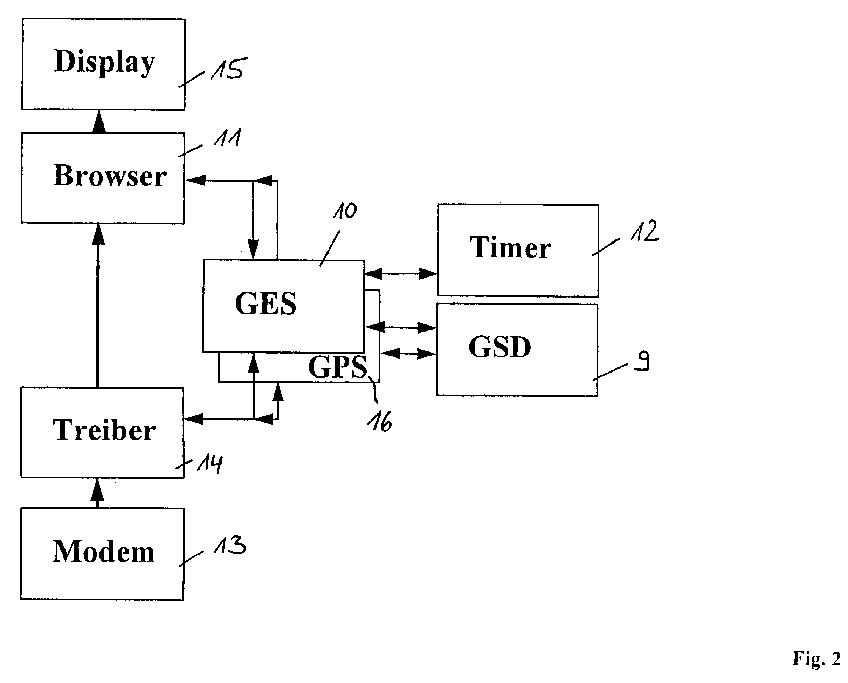

Die vorliegende Erfindung geht daher einen anderen Weg. Der teilnehmerseitige PC 1 wird gemäß Darstellung in Figur 2 um eine entsprechende Softwarekomponente in Form einer Gebührenermittlungssoftware 10 erweitert, die beispielsweise im Browser 11 des Endgeräts 1 integriert sein kann, oder damit in Verbindung steht und die durch eine besondere Verfahrensweise die erfindungsgemäße Aufgabenstellung erfüllt.

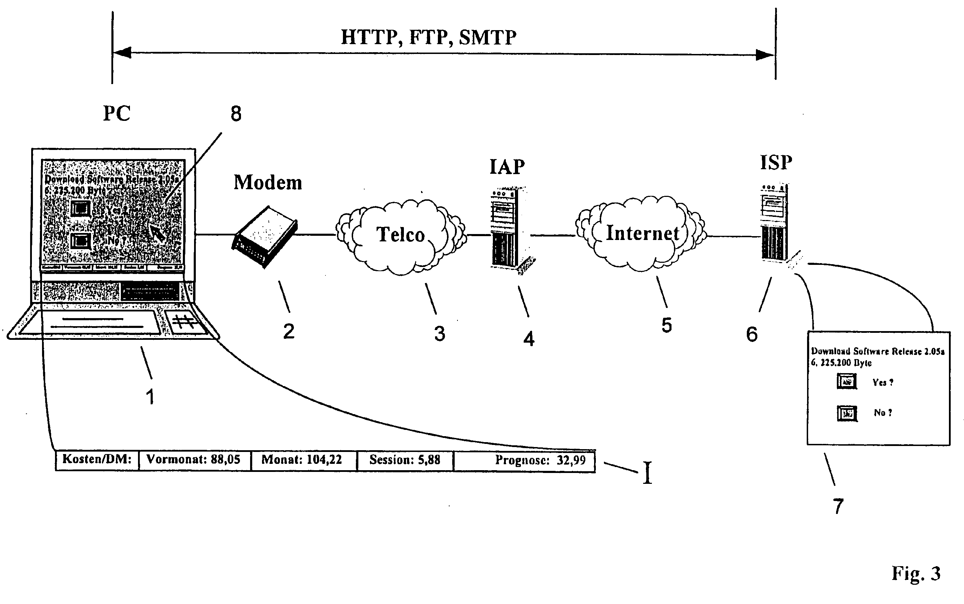

Dabei ist gemäß Figur 2 zur Ermittlung der laufenden Kosten eine entsprechende Gebührenstrukturdatei 9 im PC 1 erforderlich, die teilnehmerseitig initial mit den entsprechenden Tarifierungsverfahren des Telekommunikationsnetzes 3 und IAP 4 gefüllt wird, oder alternativ Telekommunikationsnetz- oder IAP-seitig zum Download zur Verfügung gestellt wird.
Während einer aktiven Internetsession kann somit die Gebührenermittlungssoftware 10 laufend die aktuellen Kosten unter Beachtung der Zeitdauer einer Session, welche sie beispielsweise über den PC-üblichen Uhrenbaustein, oder alternativ durch eigenes Zählen in einem Timer 12 ermittelt, unter Beachtung des übertragenen Datenvolumens, welches sie in Verbindung mit Modem 13, Treibersoftware 14 und Browsersoftware 11 ermittelt, sowie in Verbindung mit der Gebührenstrukturdatei 9 berechnen und vorzugsweise an einer prädestinierten Stelle am Bildschirm 8, 15 des Endgeräts, beispielsweise in ein freies Feld der Browseranzeige integriert, zur Anzeige bringen, wie es in Figur 3 dargestellt ist.

Vorzugsweise können auf diese Art unterschiedliche Anzeigen, wie beispielsweise bisherige Gesamtkosten im Berechnungszeitraum (z. B. monatlich) und Kosten der laufenden Session getrennt angezeigt werden. Auch ist beispielsweise eine optionale Warnung bei einer voreingestellten Höchstgrenze möglich (Monatslimit).

Die Ermittlung der präventiven Kosten einer bevorstehenden Übertragung sind in dem Fall möglich, wenn eine Information zum bevorstehenden Datenumfang vorhanden ist. Dies ist insbesondere bei FTP-Verkehr häufig der Fall, wenn beispielsweise ein ISP Download-Dateien mit Angabe der Datenmenge zur Verfügung stellt.

Beim erfindungsgemäßen Verfahren wird davon ausgegangen, daß diese Mengenangaben anbieterseitig mit einer besonderen Kennzeichnung versehen werden, die der PC-seitige Browser erkennen und dadurch die mitgeführte Mengenangabe ermitteln kann. Alternativ hierzu ist eine Auswertesoftware erforderlich, die nach der Kennzeichnung der betreffenden Bildschirmposition des Benutzers, bzw. durch händische Dateneingabe den Wert erfaßt. Auf dieser Grundlage kann eine Gebührenprognosesoftware 16 (GPS) unter Verwendung der Gebührenstrukturdatei 9 eine entsprechende Kostenkalkulation durchführen, wobei sie optional den zu erwartenden protokollspezifischen Übertragungsoverhead sowie absehbare Übertragungsengpässe, die zu einer Verlängerung der Übertragungszeit führen, berücksichtigt. Letzteres kann auf Basis der bisher PC-seitig empfangenen Datenraten pro Zeiteinheit durch eine automatische statistische Auswertung erfolgen. Die Prognosekosten werden vorzugsweise gemäß o.g. Ausführung in einem weiteren dafür geeigneten Browserfeld angezeigt.

## Patentansprüche

1. Verfahren zur laufenden und präventiven Anzeige von Übertragungskosten bei der Datenübertragung von Internet- und Onlinedaten über mindestens ein Kommunikationsnetz von einem Teilnehmer zu mindestens einem Diensteanbieter und umgekehrt, wobei zur Ermittlung und Anzeige der Gesamtkosten für laufende Datenübertragungen im Endgerät des Teilnehmers eine Gebührenermittlungssoftware (10) derart eingesetzt wird, daß sie unter Nutzung einer Gebührenstrukturdatei (9), die alle relevanten Gebührenverfahren der an der Verbindung beteiligten Diensteanbieter (4,6) und Kommunikationsnetze (3) enthält, sowie unter Ermittlung der laufenden Kommunikationszeit und/oder des Übertragungsvolumens die aktuellen Übertragungskosten berechnet und vorzugsweise auf einem vorhandenen Display (8) oder Bildschirm des Endgeräts (1) zur Darstellung bringt,
**dadurch gekennzeichnet, daß** zur Ermittlung und Anzeige der Gesamtkosten für bevorstehende Datenübertragungen eine zusätzliche Gebührenprognosesoftware (16) im Endgerät (1) eingesetzt wird, die vorzugsweise durch automatische Erkennung oder durch händische Vorarbeit oder durch händische Eingabe eines entsprechenden Wertes, den Datenumfang einer bevorstehenden Übertragung erkennt und daraus unter Berücksichtigung der Gebührenstrukturdatei die prognostizierten Übertragungskosten ermittelt und am Endgerät (1) zur Anzeige bringt, wobei ein zusätzliches Menue am Endgerät (1) zur Anzeige gebracht wird, welches einen kostenoptimierten Vorschlag mit entsprechender Aktivierungsmöglichkeit beinhaltet, um eine endgeräteseitige Übertragung der gewünschten Daten zu einem kostengünstigeren späteren Zeitpunkt automatisch vorzunehmen, wobei die entsprechende automatische Ausführung durch die Gebührenprognosesoftware (16) oder ein hierdurch gesteuertes aufgabenspezifisches getrenntes Modul durchgeführt wird.

2. Verfahren gemäß Anspruch 1, **dadurch gekennzeichnet, daß** die Gebührenstrukturdatei (9) initial händisch oder vorzugsweise per Download aus dem Telekommunikationsnetz (3) und/oder vom Diensteanbieter (4) in das Endgerät geladen wird.

3. Verfahren gemäß Anspruch 1 oder 2, **dadurch gekennzeichnet, daß** die Gebührenstrukturdatei (9) anwendungsspezifisch Gebührenstrukturen unterschiedlicher Zugangsnetze (3) und Diensteanbieter (4, 6) enthält, wobei die Gebührenermittlungssoftware (10) in diesem Fall die jeweiligen Gebühren unter Berücksichtigung der Zugangskennung der beteiligten Telekommunikationsnetze und Diensteanbieter ermittelt.

4. Verfahren gemäß einem der Ansprüche 1 bis 3, **dadurch gekennzeichnet, daß** die Gebührenprognosesoftware (16) unter Berücksichtigung der voraussichtlich durch Protokoll-Overhead hinzukommenden Datenmenge sowie des statistischen Datendurchsatzes die prognostizierten Übertragungskosten ermittelt und am Endgerät (1) zur Anzeige bringt.

5. Verfahren gemäß einem der Ansprüche 1 bis 4, **dadurch gekennzeichnet, daß** die Anzeige der Übertragungskosten in einem dafür geeigneten Feld der Anzeigedarstellung (15) der Browsersoftware (14) des Endgeräts (1) erfolgt.

6. Verfahren gemäß einem der Ansprüche 1 bis 5, **dadurch gekennzeichnet, daß** die Gebührenermittlungssoftware (10) und die Gebührenprognosesoftware (16) direkt innerhalb der Browsersoftware (11) des Endgeräts (1) angeordnet sind, wobei die Gebührenstrukturdatei (9) in diesem Fall vorzugsweise ebenfalls in der Browsersoftware verwaltet wird.

7. Verfahren gemäß einem der Ansprüche 1 bis 6, **dadurch gekennzeichnet, daß** seitens des Diensteanbieters (4) eine Kennzeichnung der Volumenangabe angebotener Datenübertragungen derart erfolgt, daß diese Kennzeichnung endgeräteseitig zur automatische Erfassung der Datenvolumen für die Kostenberechnung geeignet ist.

8. Verfahren gemäß einem der Ansprüche 1 bis 7, **dadurch gekennzeichnet, daß** für den Fall, daß der Teilnehmer über eine Mehrzahl von Endgeräten verfügt, die mittels einer privaten Telekommunikationsanlage, einem privaten Telekommunikationsnetz oder einem lokalen Datennetz miteinander verbunden sind, eine teilnehmerseitig zentrale Gebührenerfassung in einer zentralen Gebührenerfassungseinrichtung für die mehreren Endgeräte vorgenommen wird, wobei die ermittelten endgerätespezifischen Gebühren jeweils automatisch zum betreffenden Endgerät übertragen werden und/oder abgerufen und/oder eingesehen werden können.

9. Verfahren gemäß einem der Ansprüche 1 bis 8, **dadurch gekennzeichnet, daß** die zentrale Gebührenerfassungseinrichtung automatisch oder auf Anforderung unterschiedliche Auf- und Zusammenstellungen von Summenkosten mehrerer Endgeräte erstellt.

## Claims

1. Method for the running and preventive display of transmission costs in the data transmission of internet and online data over at least one communications network from a subscriber to at least one service provider and vice versa, wherein for determining and displaying the total costs for current data transmissions charge determination software (10) is used in the terminal device of the subscriber in such a way that by making use of a tariff structure file (9) containing all relevant charging methods of the service providers (4, 6) and communications networks (3) participating in the link and by determining the current communication time and/or the transmission volume it calculates the current transmission costs and presents them preferably on an existing display (8) or screen of the terminal device (1), **characterised in that** for determining and displaying the total costs of forthcoming data transmissions additional charge forecast software (16) is used in the terminal device (1) which preferably by automatic recognition or by manual preparatory work or by manual input of a corresponding value identifies the data volume of a forthcoming transmission and from this, taking the tariff structure file into account, determines the forecast transmission costs and displays them on the terminal device (1), wherein an additional menu is displayed on the terminal device (1) which contains a cost-optimised proposal with a corresponding possibility for activation in order to carry out automatically transmission of the desired data on the part of the terminal device at a later, lower-cost point in time, wherein the corresponding automatic execution is carried out by the charge forecast software (16) or a separate, task-specific module controlled by the latter.

2. Method according to claim 1, **characterised in that** the tariff structure file (9) is loaded into the terminal device initially by hand or preferably by downloading from the telecommunications network (3) and/or from the service provider (4).

3. Method according to claim 1 or 2, **characterised in that** the tariff structure file (9) contains application-specific tariff structures of different access networks (3) and service providers (4, 6), wherein the charge determination software (10) in this case determines the charges in question with account being taken of the access identification of the participating networks and service providers.

4. Method according to any of claims 1 to 3, **characterised in that** the charge forecast software (16) determines the forecast transmission costs with account being taken of the data volume foreseeably being added by protocol overhead and of the statistical data throughput and displays them on the terminal device (1).

5. Method according to any of claims 1 to 4, **characterised in that** the transmission costs are displayed in a field suitable for this purpose in the display presentation (15) of the browser software (14) in the terminal device (1).

6. Method according to any of claims 1 to 5, **characterised in that** the charge determination software (10) and the charge forecast software (16) are configured directly within the browser software (11) in the terminal device (1), wherein the tariff structure file (9) in this case is preferably likewise administered in the browser software.

7. Method according to any of claims 1 to 6, **characterised in that** on the part of the service provider (4) identification of the statement of volume of supplied data transmissions ensues in such a way that this identification is suitable at the terminal device end for automatic capture of the data volumes for the cost calculation.

8. Method according to any of claims 1 to 7, **characterised in that** in the event of the subscriber having a plurality of terminal devices at his disposal which are connected to one another by means of a private telecommunications installation, a private telecommunications network or a local data network central charge capture in a central charge capture device is carried out on the subscriber side for the plurality of terminal devices, wherein the charges specific to the terminal devices determined are transmitted automatically in each case to the terminal device in question and/or can be retrieved and/or inspected.

9. Method according to any of claims 1 to 8, **characterised in that** the central charge capture device draws up automatically or on request different listings and compilations of sum costs of a plurality of terminal devices.

## Revendications

1. Procédé pour l'affichage permanent et préventif de coûts de transmission lors de la transmission de données Internet et de données en ligne par l'intermédiaire d'au moins un réseau de communication d'un abonné vers au moins un fournisseur de services et inversement, selon lequel pour rechercher et afficher les coûts totaux pour les transmissions de données en cours, un logiciel de recherche de tarif (10) est utilisé dans le terminal de l'abonné de manière à calculer les coûts de transmission actuels et à les visualiser de préférence sur un affichage (8) ou un écran prévu sur le terminal (1), en utilisant un fichier de structure de tarif contenant tous les procédés de tarification appropriés des fournisseurs de services (4, 6) et réseaux de communication (3) participant à la connexion, et en recherchant la durée de communication en cours et/ou le volume de transmission,
**caractérisé en ce que** pour rechercher et afficher les coûts totaux pour les transmissions de données imminents, on utilise dans le terminal (1) un logiciel supplémentaire de pronostic de tarif (16) qui détecte, de préférence grâce à une détection automatique ou à une action préparatoire manuelle ou à une entrée manuelle d'une valeur correspondante, la quantité des données d'une transmission imminente et recherche à partir de là, en tenant compte du fichier de structure de tarif, les coûts de transmission pronostiqués et les affiche sur le terminal (1), étant précisé qu'un menu supplémentaire s'affiche sur le terminal (1) et contient une proposition à coût optimisé avec une possibilité d'activation correspondante pour effectuer automatiquement une transmission, côté terminal, des données voulues, à un moment ultérieur plus économique, et que l'exécution automatique correspondante se fait grâce au logiciel de pronostic de tarif (16) ou à un module distinct commandé par celui-ci et à tâches spécifiques.

2. Procédé selon la revendication 1, **caractérisé en ce que** le fichier de structure de tarif (3) est initialement chargé dans le terminal manuellement ou de préférence téléchargé à partir du réseau de télécommunication (3) et/ou par le fournisseur de services (4).

3. Procédé selon la revendication 1 ou 2, **caractérisé en ce que** le fichier de structure de tarif (9) contient spécifiquement pour chaque application les structures de tarif de différents réseaux d'accès (3) et fournisseurs de services (4, 6), le logiciel de recherche de tarif (10) recherchant dans ce cas les tarifs respectifs en tenant compte de l'identification d'accès des réseaux de télécommunication et fournisseurs de services impliqués.

4. Procédé selon l'une des revendications 1 à 3, **caractérisé en ce que** le logiciel de pronostic de tarif (16), en tenant compte de la quantité de données arrivant vraisemblablement avec la surcharge d'information de protocole et de la capacité statistique, recherche les coûts de transmission pronostiqués et les affiche sur le terminal (1).

5. Procédé selon l'une des revendications 1 à 4, **caractérisé en ce que** l'affichage des coûts de transmission se fait dans une zone adéquate de la visualisation d'affichage (15) du logiciel de navigation (14) du terminal (1).

6. Procédé selon l'une des revendications 1 à 5, **caractérisé en ce que** le logiciel de recherche de tarif (10) et le logiciel de pronostic de tarif (16) sont disposés directement à l'intérieur du logiciel de navigation (11) du terminal (1), le fichier de structure de tarif (9) étant dans ce cas géré de préférence dans le logiciel de navigation, lui aussi.

7. Procédé selon l'une des revendications 1 à 6, **caractérisé en ce que** du côté du fournisseur de services (4), une caractérisation de l'indication de volume de transmissions de données proposées se fait de manière à convenir, côté terminal, pour la détection automatique des volumes de données pour le calcul des coûts.

8. Procédé selon l'une des revendications 1 à 7, **caractérisé en ce que** pour le cas où l'abonné dispose de plusieurs terminaux qui sont reliés entre eux à l'aide d'une installation de télécommunication privée, d'un réseau de télécommunication privé ou d'un réseau de données local, une détection de tarif centralisée côté abonné est effectuée pour les terminaux dans un dispositif de détection de tarif central, les tarifs propres aux terminaux qui ont été calculés pouvant être transmis automatiquement au terminal concerné et/ou être interrogés et/ou consultés.

9. Procédé selon l'une des revendications 1 à 8, **caractérisé en ce que** le dispositif de détection de tarif centralisé établit automatiquement ou sur demande différentes listes des coûts totaux de plusieurs terminaux.
